# EUROPÄISCHE PATENTSCHRIFT

(11) **EP 3 157 769 B1**
(45) Veröffentlichungstag und Bekanntmachung des Hinweises auf die Patenterteilung: **26.06.2019**
(21) Anmeldenummer: 15723921.1
(22) Anmeldetag: 19.05.2015
(51) Int. Cl.: B60G 7/00, F16C 11/06

(54) **VERFAHREN ZUR HERSTELLUNG EINES FAHRWERKBAUTEILS**
METHOD FOR PRODUCING A CHASSIS COMPONENT
PROCÉDÉ SERVANT À FABRIQUER UN COMPOSANT DE CHÂSSIS

(30) Priorität: 23.06.2014 DE 102014211924; 21.04.2015 DE 102015207176
(43) Veröffentlichungstag der Anmeldung: 26.04.2017
(73) Patentinhaber: ZF Friedrichshafen AG, 88046 Friedrichshafen (DE)
(72) Erfinder: EULERICH, Wolfgang, 49086 Osnabrück (DE); WELZEL, Andreas, 49191 Belm (DE); KOHLBRECHER, Guido, 49134 Wallenhorst (DE)
(86) Internationale Anmeldenummer: PCT/EP2015/060945
(87) Internationale Veröffentlichungsnummer: WO 2015/197265

(56) Entgegenhaltungen:
- DE-A1-102008 043 694
- DE-A1-102010 043 040
- DE-U1- 20 311 595
- JP-A- H06 156 032
- JP-A- 2006 307 970

## Beschreibung

Die Erfindung betrifft ein Verfahren zur Herstellung eines Fahrwerkbauteils gemäß dem Oberbegriff von Patentanspruch 1.

Fahrwerkbauteile der genannten Art sind in vielerlei Ausgestaltungen bekannt. In der Regel weisen diese ein Strukturbauteil und ein oder mehrere mit diesem fest verbundene Gehäuse, insbesondere Kugelgelenkgehäuse, auf. Beispielsweise bildet ein solches Fahrwerkbauteil einen Fahrwerkslenker, wobei die Integration des Gehäuses, insbesondere des Kugelgelenkgehäuses, in das Strukturbauteil im Regelfall durch Umspritzen, Einpressen, Anschrauben, Annieten oder Verschweißen erfolgt.

Aus der DE 203 11 595 U1 ist ein Kugelgelenk mit einem als Kugelgelenkgehäuse ausgebildeten Gehäuse bekannt, welches einen Schweißabschnitt aufweist, mittels dem es an einem als Fahrwerkslenker ausgebildeten Strukturbauteil angeschweißt werden kann, wobei das Gehäuse in eine Aufnahmeöffnung des Strukturbauteils eingesetzt ist und der Schweißabschnitt des Gehäuses mit dem Strukturbauteil verschweißt ist. In einer Ausgestaltung ist der Schweißabschnitt einseitig abgeschrägt ausgeführt, und zwar mit der Seite, die dafür vorgesehen ist, am Rand der Aufnahmeöffnung im Strukturbauteil anzuliegen.

Aus der DE 10 2010 043 040 A1 ist ein Verfahren zur Herstellung eines Fahrwerkbauteils bekannt, bei dem zwei Gehäuseteile, ein Strukturbauteil und ein als Kugelgelenkgehäuse ausgebildetes Gehäuse, bevor sie miteinander verschweißt werden, individuell beschichtet werden können. Als bevorzugtes Schweißverfahren ist das Laserschweißen angegeben. Es hat sich aber herausgestellt, dass die Schweißverbindung einerseits sehr präzise hergestellte Bauteile erfordert und wegen der vorliegenden Beschichtung qualitative Nachteile bei der Schweißverbindung auftreten können. Deshalb wird die Beschichtung im Bereich der Schweißverbindung entfernt, wodurch ein Fertigungsnachteil hingenommen werden muss. Des Weiteren kann in dem Ringspalt zwischen den beiden Bauteilen wegen der entfernten Beschichtung ein Korrosionsproblem auftreten.

Der JP H06 156032 A ist ein Gelenkgehäuse eines Kugelgelenks bekannt, wobei das Gelenkgehäuse einen Flansch mit einer Schrägfläche aufweist, die an einer komplementär hierzu schräg ausgebildeten Fase einer Aufnahmeöffnung anliegt. Das Dokument JP H06 156032 A zeigt ein Verfahren gemäß dem Oberbegriff des Anspruchs 1.

Aus der DE 10 2008 043 694 A1 ist es bekannt, ein Gehäuseoberteil mit einem Gehäuseunterteil zu verschweißen, wobei das Gehäuseunterteil eine schalenförmige Aufnahme für einen Gelenkzapfen aufweist. Hierbei berühren sich vor dem Schweißen eine flächenförmige Schweißfügefläche und eine linienförmige Schweißfügefläche.

Aufgabe der vorliegenden Erfindung ist es, die aus dem Stand der Technik bekannten Probleme zu minimieren.

Erfindungsgemäß wird die Aufgabe dadurch gelöst, dass zumindest eine der beiden sich berührenden Flächen im Verhältnis zur anderen der beiden Flächen als eine Schrägfläche ausgeformt wird, so dass vor der Schweißung eine Linienberührung zwischen den beiden Flächen vorliegt, wobei die Aufnahmeöffnung im Strukturbauteil im Verhältnis zur Gehäusegeometrie, die in die Aufnahmeöffnung eingeschoben wird, mit einem Untermaß ausgeführt wird..

Die Schweißung erfolgt durch eine Widerstandsschweißung, insbesondere eine Kondensatorentladungsschweißung oder eine Mittelfrequenzschweißung. Die Linienberührung zentriert beide Bauteile und führt zu einer partiellen Anschmelzung und damit zu einer stoffschlüssigen Verbindung ohne Zusatzschweißstoffe. Die Linienberührung ist insbesondere vollumfänglich.

Durch die Pressverbindung tritt beim Verschweißen im Bereich der einander zugewandten Mantelflächen eine große Schweißfläche auf, die hohe Kräfte übertragen kann.

Grundsätzlich ist es möglich, dass die Gehäusegeometrie mit einem konstanten Querschnitt oder mit einem konischen Querschnitt ausgeführt wird. Bei einem konischen Querschnitt kann beim Montagevorgang eine Selbstzentrierung genutzt werden. Durch die Selbstzentrierung zwischen dem Gehäuse und der Aufnahmeöffnung können Fertigungsabweichungen der Fügepartner Strukturbauteil und Gehäuse kompensiert werden. Auf diese Weise kann eine vollumfängliche Linienberührung prozesssicher erreicht werden. Die vollumfängliche Linienberührung ist wichtig, um bei der anschließenden Schweißung über den gesamten Umfang im Bereich der Linienberührung gleiche Schweißverhältnisse, insbesondere eine gleichmäßige Schweißstromdichte, zu erreichen. Dies wiederum ist wichtig zur Erzielung eines reproduzierbar gleichen Schweißprozesses wie er für eine Serienfertigung benötigt wird.

Unter einem Strukturbauteil im Sinne der Erfindung ist ein flächenhaftes Metallblechteil zu verstehen, welches gekrümmt oder eben oder teilweise gekrümmt und teilweise eben ausgebildet ist. Flächenhaft bedeutet, dass die Materialstärke des Strukturbauteils sehr viel geringer als die übrigen Abmessungen ist. Die Materialstärke ist vorzugsweise konstant über die flächenhafte Erstreckung des Strukturbauteils, welches insbesondere massiv ausgebildet ist. Unter einer Aufnahmeöffnung im Sinne der Erfindung ist eine runde oder unrunde, das Strukturbauteil durchdringende Ausnehmung zu verstehen. Die Aufnahmeöffnung wird vorzugsweise vollständig umlaufend von dem Strukturbauteil umschlossen.

Gemäß einem vorteilhaften Unteranspruch wird die Öffnung, insbesondere die Aufnahmeöffnung, im Strukturbauteil mittels eines Stanzverfahrens hergestellt. Eine Stanzung kann mit vergleichsweise einfachen Werkzeugen eine hohe Maßhaltigkeit erzeugen.

Des Weiteren kann vorgesehen sein, dass in die Öffnung, insbesondere die Aufnahmeöffnung, eine Senkung eingeformt wird, die schräg zur Mittelachse der Öffnung verläuft. In einem Längsschnitt durch die Mittelachse der Öffnung erscheint die Senkung beidseits der Mittelachse als Fase. Diese Senkung kann der Zentrierung beider Teile vor dem Verschweißen dienen, oder angeschmolzenen Werkstoff aufnehmen.

Vorteilhafterweise wird an dem Gehäuse die in Richtung des Strukturbauteils weisende Schrägfläche angeformt. Das Gehäuse benötigt unabhängig von dieser Schrägfläche einige Arbeitsschritte, bei denen die besagte Schrägfläche gleich mit ausgeführt wird.

Das Gehäuse verfügt über einen Absatz, der als formschlüssige Tragverbindung wirksam ist, wenn die Verschweißung brechen sollte. Die gehäuseseitige Schrägfläche wird auf diesem Absatz angeformt. Der Absatz bietet zudem den Vorteil, dass ein Presswerkzeug angesetzt werden kann und dadurch die Gehäusegeometrie außerhalb der Presskraft liegt. Des Weiteren wird ein Ringspalt im Kontaktbereich zwischen dem Absatz und dem Strukturbauteil durch die Schweißung geschlossen.

Vorteilhafterweise wird gemäß einer nicht-erfindungsgemäßen Alternative die Verbindung der als Durchgangsöffnung ausgebildeten Aufnahmeöffnung mit dem Gehäuse mit einer Spielpassung ausgeführt, so dass ein Ringspalt vorliegt. Die Spielpassung erlaubt eine größere Fertigungstoleranz.

Um eine Spaltkorrosion zu vermeiden, wird der Ringspalt zwischen dem Gehäuse und der Durchgangsöffnung durch eine Verschiebung von Volumenanteilen des Gehäuses und/oder des Strukturbauteils geschlossen. Der Ringspalt lässt sich ganz einfach dadurch schließen, indem ein Rand der Durchgangsöffnung axial gestaucht wird.

Alternativ kann der Ringspalt zwischen dem Gehäuse und der Durchgangsöffnung mittels einer Beschichtung der verschweißten Baugruppe geschlossen und somit vor Korrosion geschützt werden.

Gemäß einer alternativen Ausgestaltung werden Mantelflächen von Aufnahmeöffnung und Gehäuse, welche sich jeweils parallel zu den Mittelachsen von Aufnahmeöffnung und Gehäuse erstrecken, miteinander verschweißt. Bei dieser Ausführungsform ist die Aufnahmeöffnung des Strukturbauteils zumindest im Wesentlichen zylindrisch ausgebildet. Die Aufnahmeöffnung kann wiederum unterteilt sein in einen Glattschnitt und einen Stanzausbruch. Das Gehäuse weist wiederum eine Zentrierschräge auf, die der Aufnahmeöffnung zugewandt ist. Die Aufnahmeöffnung im Strukturbauteil wird im Verhältnis zur Gehäusegeometrie, die in die Aufnahmeöffnung eingeschoben wird, wiederum mit einem Untermaß ausgeführt. Unmittelbar vor der Schweißung liegt auf der Zentrierschräge wiederum eine Linienberührung zwischen den beiden Fügepartnern vor. Insbesondere ist das Strukturbauteil derart ausgerichtet, dass der Glattschnitt der Aufnahmeöffnung der Zentrierschräge zugewandt ist. Nach Beginn der Schweißung wird in axialer Richtung zunächst die Zentrierschräge überwunden. An die Zentrierschräge schließt sich an deren größten Durchmesser in axialer Erstreckung des Gehäuses ein Bereich an, welcher außenseitig eine Zylindermantelfläche aufweist.

Anschließend werden die Fügepartner in axialer Fügerichtung weiter relativ zueinander bewegt unter Ausbildung einer, im Schnitt betrachtet, rechteckig ausgebildeten Schweißung mit zwei zumindest im Wesentlichen parallelen Seiten, die sich in Richtung der Mittelachsen von Aufnahmeöffnung und Gehäuse erstrecken. Die rechteckig ausgebildete Schweißung mit sich parallel zur Mittelachse von Strukturbauteil und Gehäuse erstreckenden Seiten, erstreckt sich über die komplette Materialstärke des Strukturbauteils oder einen Teil derselben. Im letztgenannten Fall sind das Strukturbauteil und das Gehäuse bei dem restlichen Teil der Materialstärke wiederum unter Ausbildung eines Ringspalts voneinander getrennt. Der Ringspalt zwischen dem Gehäuse und der Durchgangsöffnung kann wiederum durch eine Verschiebung von Volumenanteilen des Gehäuses und/oder des Strukturbauteils geschlossen werden, um eine Spaltkorrosion zu vermeiden. Alternativ kann der Ringspalt zwischen dem Gehäuse und der Durchgangsöffnung ebenfalls wiederum mittels einer Beschichtung der verschweißten Baugruppe geschlossen und somit vor Korrosion geschützt werden. Der Ringspalt wird im Rahmen der weiteren Montage von dem Dichtbalg abgedeckt und so ebenfalls vor Korrosion, insbesondere vor Spaltkorrosion, geschützt. Nach Beendigung der Schweißung ist das Strukturbauteil derart an dem Gehäuse festgelegt, dass dieses mit dessen Unterseite von der zweiten Schrägfläche beabstandet ist. Die Unterseite und die zweite Schrägfläche sind bevorzugt in einem Winkel von 45° zueinander angeordnet. Die zweite Schrägfläche ist auf dem Absatz angeformt. Durch diese Anordnung wird an dieser Stelle die Gefahr einer Spaltkorrosion vermieden. Eine Oberflächenbeschichtung dieses Bereichs nach dem Schweißen ist problemlos möglich, beispielsweise durch Sprühen, Tauchen oder Galvanisieren. Die zweite Schrägfläche ist auf dem Absatz angeformt.

Bei allen zuvor beschriebenen Ausgestaltungen werden die Fügepartner Strukturbauteil und Gehäuse während der Schweißung ausschließlich translatorisch zueinander bewegt.

Ein Fahrwerkbauteil aufweisend ein Strukturbauteil und ein insbesondere als Kugelgelenkgehäuse ausgebildetes Gehäuse wird mit einem Verfahren, wie zuvor beschrieben, hergestellt. Das Fahrwerkbauteil kann als Flanschgelenk oder als Mehrpunktlenker ausgebildet sein. Unter einem Flanschgelenk im Sinne der Erfindung ist ein Fahrwerkbauteil zu verstehen, das aus einem Kugelgelenk und einem Anbindungsflansch gebildet ist, wobei der Anbindungsflansch zur Anbindung des Flanschgelenks an ein weiteres Fahrwerkbauteil, beispielsweise ein Lenkerbauteil, dient. Unter einem Mehrpunktlenker im Sinne der Erfindung ist ein Fahrwerkslenker mit mehr als einem und weniger als fünf Gelenkpunkten zu verstehen, wobei mindestens einer der Gelenkpunkte ein Kugelgelenk aufweist. Mit Bezug auf die Anzahl der Gelenkpunkte werden diese Fahrwerklenker auch als Zwei-, Drei- oder Vierpunktlenker bezeichnet.

Nach dem Einsetzen des Kugelgelenkgehäuses in die Aufnahmeöffnung des Strukturbauteils und dem anschließenden Verschweißen von Strukturbauteil und Kugelgelenkgehäuse sind keine weiteren Schweißoperationen an der als Flanschgelenk oder als Mehrpunktlenker ausgebildeten Fahrwerkbaugruppe erforderlich. Das Fahrwerkbauteil hat daher den Vorteil, dass es vollflächig mit einem Korrosionsschutz versehen werden kann, welcher beim weiteren Komplettieren erhalten bleibt. Ein wirkungsvoller Korrosionsschutz ist bei Flanschgelenken und Mehrpunktlenkern besonders wichtig, weil diese aufgrund ihres Einbauorts im Fahrzeug korrosionsbegünstigenden Umgebungseinflüssen wie Feuchtigkeit und Streusalz in besonderem Maße ausgesetzt sind.

Vorteilhaft ist das insbesondere als Kugelgelenkgehäuse ausgebildete Gehäuse Bestandteil eines Radialkugelgelenks, eines Axialkugelgelenks oder eines Kugelhülsengelenks. Kugelgelenkgehäuse der zuvor beschriebenen Art können als Gehäuse oder als Teil eines Gehäuses von Radialkugelgelenken, Axialkugelgelenken oder Kugelhülsengelenken ausgebildet sein. Ein bereits stoffschlüssig durch Schweißen ohne Zusatzwerkstoff mit einem Strukturbauteil verbundenes Kugelgelenkgehäuse weiter zu einem kompletten Kugelgelenk zu montieren hat den Vorteil, dass innerhalb des Kugelgelenkgehäuses liegende Bauteile des Kugelgelenks nicht mehr durch die beim Schweißen entstehende Wärme geschädigt werden können.

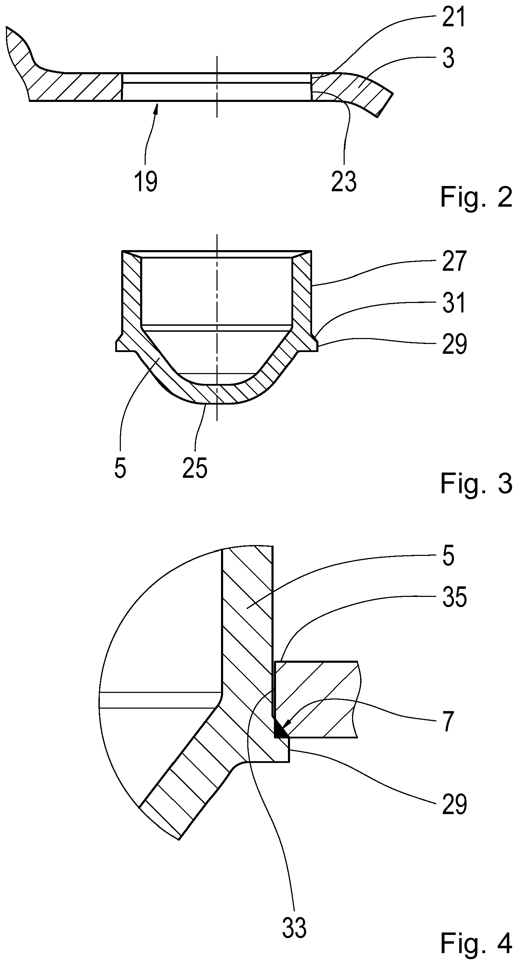

Anhand der folgenden Figurenbeschreibung soll die Erfindung näher erläutert werden, wobei sich gleiche Bezugszeichen auf gleiche oder ähnliche oder funktional gleiche Bauteile oder Elemente beziehen. Hierbei zeigen die Fig. 2 bis 4 eine von der Erfindung abweichende und nicht-erfindungsgemäße Alternative.
Fig. 1 Darstellung des Fahrwerkbauteils
Fig. 2 - 4 Verbindung Gehäuse - Strukturbauteil mit einem Ringspalt
Fig. 5 - 7 Verbindung Gehäuse - Strukturbauteil mit Untermaß über Schrägfläche
Fig. 8 - 9 Verbindung Gehäuse - Strukturbauteil über mehrere Schrägflächen
Fig. 10 - 12 Verbindung Gehäuse - Strukturbauteil mit Untermaß über parallel verlaufende Mantelflächen von Strukturbauteil und Gehäuse.

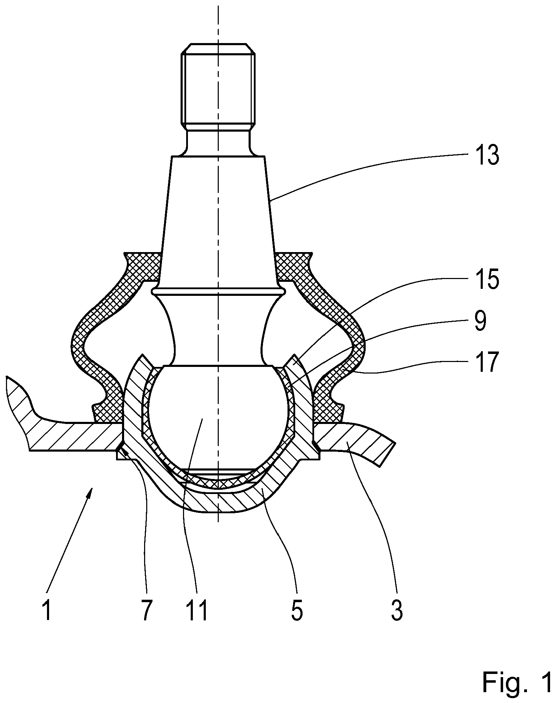

Die Figur 1 zeigt ein Fahrwerkbauteil 1 mit einem Kugelgelenk. Ein Strukturbauteil 3, das z. B. in einem Fahrwerk der Verbindung zu einem weiteren Bauteil dient, ist mit einem Gehäuse 5 mittels einer Schweißung 7 verbunden. Die Schweißung 7 ist als Widerstandsschweißung ohne Zusatzwerkstoffe ausgeführt. Innerhalb des Gehäuses 5 ist eine Kugelpfanne 9 angeordnet, in der eine Gelenkkugel 11 eines Kugelzapfens 13 rotatorisch und winkelbeweglich gelagert ist. Die Kugelpfanne 9 erstreckt sich dabei über den Äquator der Gelenkkugel 11 und wird von einem nach radial innen umgeformten Rand 15 des Gehäuses 5 gesichert. Ein Dichtbalg 17 schützt das Kugelgelenk gegen äußere Verschmutzung und/oder Feuchtigkeit.

Die Figurenfolge 2 bis 4 zeigt eine nicht-erfindungsgemäße Alternative und verdeutlicht den Aufbau und das Herstellungsverfahren des gesamten Gehäuses 3; 5. In das Strukturbauteil 3 wird eine Aufnahmeöffnung 19 gestanzt. Dabei kann ein Glattschnitt 21 der gestanzten Oberfläche an einer Ober- oder einer Unterseite des Strukturbauteils angrenzen. Ein Stanzausbruch 23 kann eine leicht konische Form vergleichbar mit einer konischen Senkung aufweisen. Des Weiteren kann der Rand 35 der Aufnahmeöffnung 19 eine Senkung 41 in Form einer Fase, einer Schräge oder einer Rundung aufweisen, die schräg zur Mittelachse der Aufnahmeöffnung 19 verläuft.

Das Gehäuse 5 ist nach unten hin geschlossen und verfügt in diesem Bereich über einen sphärisch gekrümmten Boden 25, dem sich eine in Axialrichtung weisende Ringwandung 27 anschließt. In diesem beispielhaften Bauteil ist die die Gehäusegeometrie bildende Ringwandung 27 mit einem konstanten Querschnitt ausgeführt.

Am Übergang zwischen dem Boden 25 und der Ringwandung 27 ist ein Absatz 29 mit einer in Richtung des Strukturbauteils 3 weisenden Schrägfläche 31 angeformt. Der Außendurchmesser des Absatzes 29 ist größer als die Aufnahmeöffnung 19 im Strukturbauteil 3, wobei die Aufnahmeöffnung 19 wiederum größer ist als der Außendurchmesser der Ringwandung 27, die übrigens oder alternativ zur Schrägfläche 31 des Absatzes auch konisch und damit mit einer Schrägfläche ausgeführt sein kann.

Bei der Montage des Strukturbauteils 3 mit dem Gehäuse 5 wird das Gehäuse 5 mit seiner Ringwandung 27 in die Aufnahmeöffnung 19 geschoben, bis das Strukturbauteil an der Schrägfläche 31 des Gehäuses 5 anliegt. Dabei liegt zwischen dem Gehäuse 5 und der als Durchgangsöffnung 19 ausgebildeten Aufnahmeöffnung eine Spielpassung mit einem Ringspalt 33 vor. Anschließend werden axial am Gehäuse 5 und am Strukturbauteil 3 nicht dargestellte Schweißelektroden unter axialer Vorlast angelegt. Dazu dient vorteilhafterweise die Unterseite des Absatzes 29, da die Schweißelektrode sehr nahe an einer angestrebten Schweißung 7 angesetzt werden kann. Im Kontaktbereich der Schrägfläche 31 mit der Wandung der Durchgangsöffnung 19 wird der Werkstoff angeschmolzen und es entsteht die Schweißung 7.

In einem weiteren Arbeitsschritt wird der Ringspalt 33 verschlossen. Entweder nutzt man eine Beschichtung aus, die in den Ringspalt 33 eindringt, oder man nimmt eine Verschiebung von Volumenanteilen des Gehäuses 5, z. B. der Ringwandung 27, und/oder des Strukturbauteils 3 vor. Besonders einfach und schonend für die Gehäusegeometrie kann man den Rand 35 der Durchgangsöffnung 19 axial stauchen, wodurch Werkstoff nach radial innen verdrängt wird und den Ringspalt 33 zuverlässig verschließt.

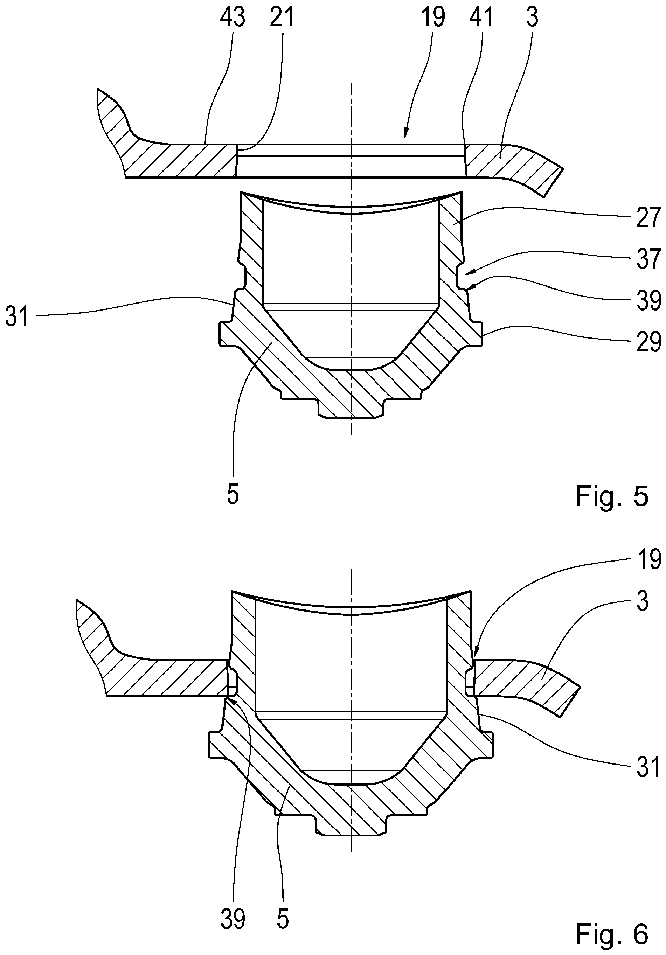

Die Figuren 5 bis 7 zeigen eine Abwandlung zum Herstellungsverfahren gemäß der Beschreibung zu den Figuren 2 bis 4. Abweichend wird die Aufnahmeöffnung 19 im Strukturbauteil im Verhältnis zur Gehäusegeometrie, also zum Außendurchmesser der Ringwandung 27, die in die Aufnahmeöffnung 19 geschoben wird, mit einem Untermaß ausgeführt.

Unterhalb einer Ringnut 37 zur Aufnahme des Dichtbalgs 17 ist an der äußeren Mantelfläche der Ringwandung 27 eine Zentrierschräge 39 angeformt. Der Längenbereich zwischen der Zentrierschräge 39 und dem Absatz 29 ist als ein Konus mit einer Schrägfläche 31 zur Aufnahmeöffnung 19 ausgeführt. Alternativ kann auch die Aufnahmeöffnung 19 konisch geprägt und der besagte Bereich zwischen der Zentrierschräge 39 und dem Absatz 29 mit einem konstanten Außendurchmesser hergestellt sein. Der besagte Längenbereich kann in der einfachsten Variante auch einen konstanten Querschnitt und die Aufnahmeöffnung einen konstanten Durchmesser aufweisen. Die Ausrichtung des Glattschnitts 21 in der Aufnahmeöffnung 19 kann wahlweise vorgesehen sein. Tendenziell von Vorteil ist es, wenn der Glattschnitt 21 wie in Figur 5 nach oben ausgerichtet ist und eine Fase 41 der Senkung am Übergang von der Aufnahmeöffnung 19 zur Oberseite 43 aufweist. Bei dieser Variante wird der teilweise Grat-behaftete Übergang vom Stanzausbruch 23 zur Unterseite 45 des Strukturbauteils 3 während der Schweißung aufgeschmolzen. Wenn der Glattschnitt 21 nach unten ausgerichtet ist, hat dies den Vorteil, dass eine besonders günstige Linienberührung zwischen Strukturbauteil 3 und Gehäuse 5 vorliegt.

Die Figur 6 zeigt die Montagesituation, wenn das Gehäuse 5 in die Aufnahmeöffnung 19 eingeführt ist und das Strukturbauteil 3 auf der Zentrierschräge 39 aufliegt. Damit ist die radiale Positionierung des Strukturbauteils 3 zum Gehäuse 5 gesichert. In einem weiteren Herstellschritt wird eine axiale Vorlast mittels nicht dargestellter Schweißelektroden auf die beiden Bauteile 3; 5 ausgeübt.

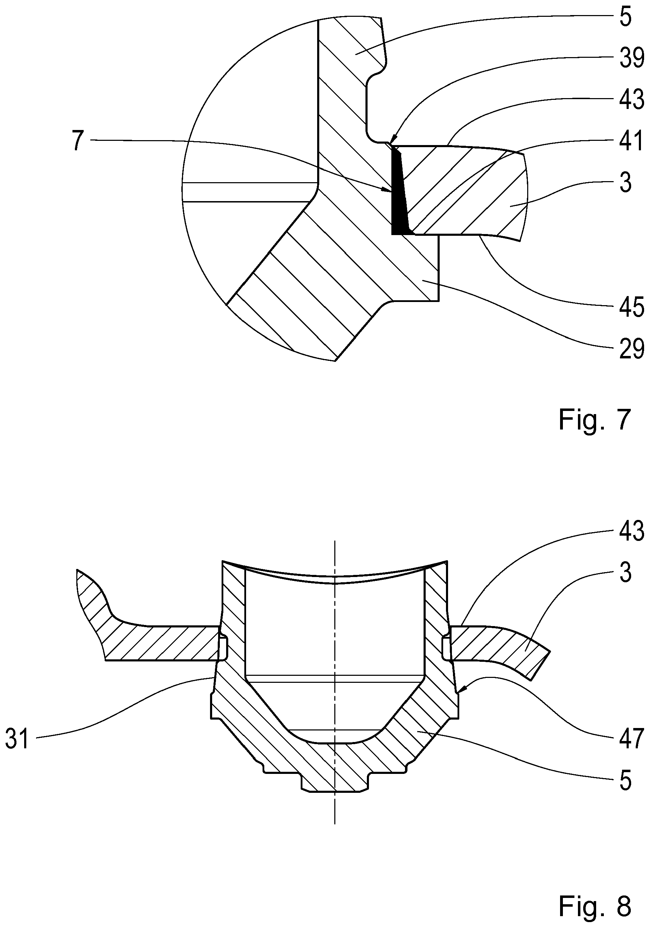

Die Figur 7 zeigt das Gehäuse 5 und das Strukturbauteil 3 mit der Schweißung 7. Die Schweißung 7 erstreckt sich über die gesamte axiale Länge der Durchgangsöffnung 19. In der Fig. 7 ist die Fase 41 an der Durchgangsöffnung 19 an der Unterseite 45 ausgeführt. Wenn man, wie vorstehend beschrieben, die Fase 41 an der Oberseite 43 ausgeführt hätte, dann wäre auch der Bereich mit verdrängtem angeschmolzenen Werkstoff gefüllt.

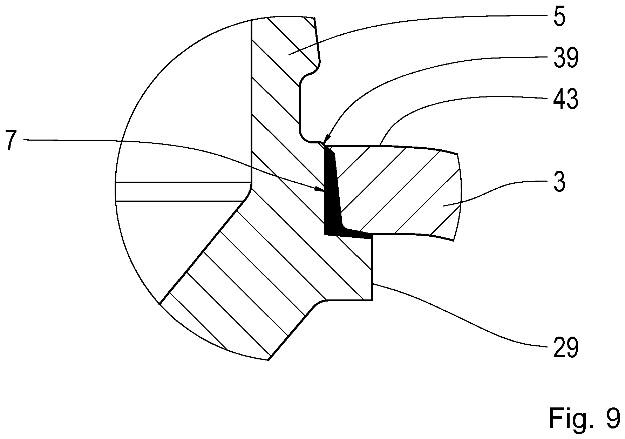

Die Figuren 8 und 9 zeigen eine Variante, bei der Merkmale der Lösung nach der Variante der Figuren 2 bis 4 mit Merkmalen der Variante nach den Figuren 5 bis 7 kombiniert sind.

So wurde an dem Gehäuse 5 eine in Richtung des Strukturbauteils 3 weisende Schrägfläche 31 angeformt, und der Durchmesser der Aufnahmeöffnung 19 weist zu dieser Schrägfläche 31 ein Untermaß auf. Des Weiteren ist der Absatz mit einer zweiten Schrägfläche 47 zum Strukturbauteil 3 ausgeführt. Der Montageablauf entspricht der Beschreibung zu den Figuren 2 bis 7. Abweichend verlängert sich jedoch der Schweißbereich radial bis an den Außendurchmesser des Absatzes 29. Folglich ist der Spalt zwischen dem Strukturbauteil 3 und dem Gehäuse 5 vollständig verschlossen. Grundsätzlich kann die radiale Erstreckung der zweiten Schrägfläche 47 im Vergleich zur Ausführung nach den Figuren 2 bis 7 kleiner sein, da die erste Schrägfläche 31 in der axialen Projektion bereits eine Stützwirkung ausübt.

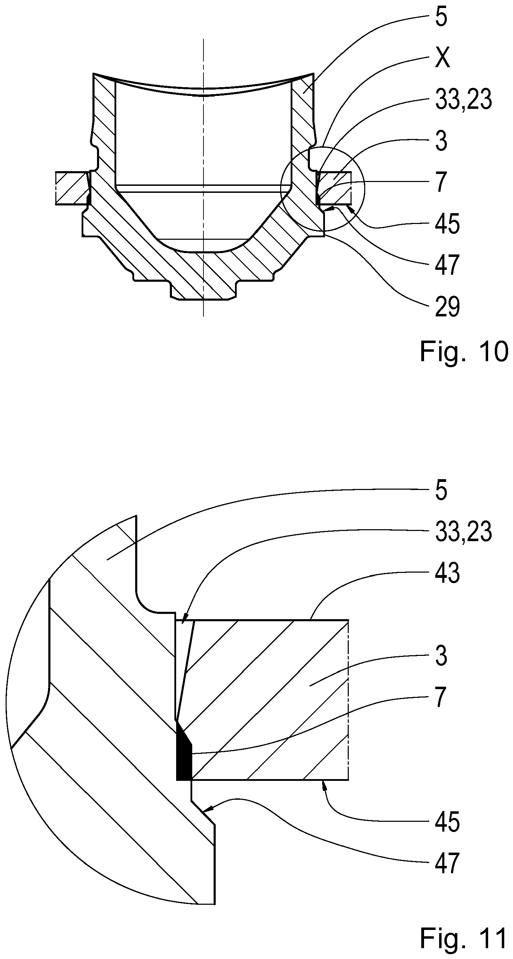

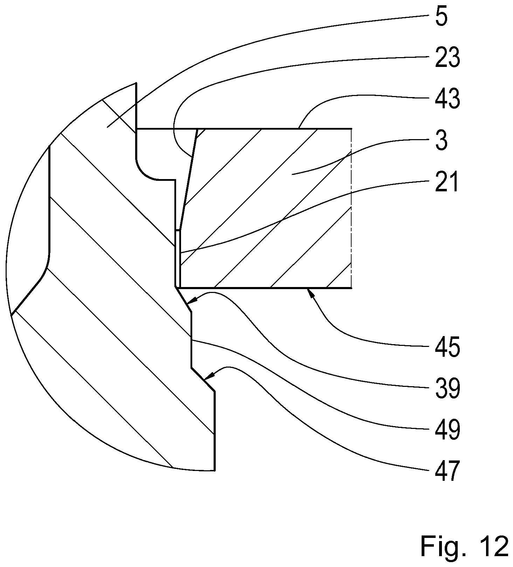

Die Figuren 10 bis 12 zeigen eine Ausführungsform bei der die Aufnahmeöffnung 19 des Strukturbauteils 3 in einen Glattschnitt 21 und einen Stanzausbruch 23 unterteilt ist und das Gehäuse 5 wiederum eine Zentrierschräge 39 aufweist, die der Aufnahmeöffnung 19 zugewandt ist. Zur Verdeutlichung ist die in der Figur 10 hervorgehobene Einzelzeit X vergrößert in Figur 11 dargestellt. Figur 12 zeigt die gleiche Einzelzeit, allerdings unmittelbar vor der Schweißung. Der größte Durchmesser der Zentrierschräge 39 ist größer als der Innendurchmesser der Aufnahmeöffnung 19, so dass zwischen den Fügepartnern 3; 5 eine Überdeckung vorliegt. Unmittelbar vor der Schweißung liegt auf der Zentrierschräge 39 wiederum eine Linienberührung zwischen den beiden Fügepartnern 3; 5 vor. Nach Beginn der Schweißung wird in axialer Richtung zunächst die Zentrierschräge 39 überwunden. An die Zentrierschräge 39 schließt sich an deren größten Durchmesser in axialer Erstreckung des Gehäuses 5 ein Bereich an, welcher eine Zylindermantelfläche 49 aufweist.

Anschließend werden die Fügepartner 3; 5 in axialer Fügerichtung weiter relativ zueinander unter Ausbildung einer, im Schnitt betrachtet, sich in axialer Richtung erstreckenden und rechteckig ausgebildeten Schweißung 7 bewegt. Die rechteckig ausgebildete Schweißung mit sich parallel zur Mittelachse von Strukturbauteil 3 und Gehäuse 5 erstreckenden Seiten, erstreckt sich über einen Teil der Materialstärke des Strukturbauteils 3. Bei dem restlichen Teil der Materialstärke sind das Strukturbauteil 3 und das Gehäuse 5 wiederum unter Ausbildung eines Ringspalts 33 voneinander getrennt. Die Schweißung 7 verbindet den Glattschnitt 21 der Aufnahmeöffnung 19 mit dem Gehäuse 5. Der Ringspalt 33 wird durch das Gehäuse 3 und den Stanzausbruch 23 begrenzt. Bei dieser Anordnung ist der Ringspalt 33 in Richtung seiner offenen Seite hin erweitert. Nach Beendigung der Schweißung ist das Strukturbauteil 3 derart an dem Gehäuse 5 festgelegt, dass dieses mit dessen Unterseite 45 von der zweiten Schrägfläche 47 beabstandet ist. Die Unterseite 45 und die zweite Schrägfläche 47 sind in einem Winkel von 45°zue inander angeordnet. Die zweite Schrägfläche 47 ist auf dem Absatz 29 angeformt.

### Bezugszeichen

- 1: Fahrwerksbauteil
- 3: Strukturbauteil
- 5: Gehäuse
- 7: Schweißung
- 9: Kugelpfanne
- 11: Gelenkkugel
- 13: Kugelzapfen
- 15: Rand
- 17: Dichtbalg
- 19: Aufnahmeöffnung, Durchgangsöffnung
- 21: Glattschnitt
- 23: Stanzausbruch
- 25: Boden
- 27: Gehäusegeometrie, Ringwandung
- 29: Absatz
- 31: Schrägfläche
- 33: Ringspalt
- 35: Rand
- 37: Ringnut
- 39: Zentrierschräge
- 41: Senkung, Fase
- 43: Oberseite
- 45: Unterseite
- 47: zweite Schrägfläche
- 49: Zylindermantelfläche

## Patentansprüche

1. Verfahren zur Herstellung eines Fahrwerkbauteils (1), umfassend ein Gehäuse (5), das mit einem Strukturbauteil (3) mittels einer Schweißung (7) verbunden wird, wobei in das Strukturbauteil (3) eine Aufnahmeöffnung (19) eingebracht und das Gehäuse (5) in die Aufnahmeöffnung (19) eingeschoben wird, wobei sich eine gehäuseseitige und eine strukturbauteilseitige Fläche berühren, **dadurch gekennzeichnet, dass** zumindest eine der beiden sich berührenden Flächen als eine im Verhältnis zur anderen der beiden Flächen als eine Schrägfläche (41; 31; 47) ausgeformt wird, so dass vor der Schweißung eine Linienberührung zwischen den beiden Flächen vorliegt, wobei die Aufnahmeöffnung (19) im Strukturbauteil (3) im Verhältnis zur Gehäusegeometrie, die in die Aufnahmeöffnung (19) eingeschoben wird, mit einem Untermaß ausgeführt wird.

2. Verfahren zur Herstellung eines Fahrwerkbauteils nach Anspruch 1 , **dadurch gekennzeichnet, dass** die Gehäusegeometrie (27) mit einem konstanten Querschnitt oder mit einem konischen Querschnitt ausgeführt wird.

3. Verfahren zur Herstellung eines Fahrwerkbauteils nach Anspruch 1 oder 2, **dadurch gekennzeichnet, dass** die Aufnahmeöffnung (19) im Strukturbauteil (3) mittels eines Stanzverfahrens hergestellt wird.

4. Verfahren zur Herstellung eines Fahrwerkbauteils nach Anspruch 3, **dadurch gekennzeichnet, dass** die Öffnung eine Senkung (41) aufweist, die schräg zur Mittelachse der Aufnahmeöffnung (19) verläuft.

5. Verfahren zur Herstellung eines Fahrwerkbauteils nach Anspruch 1, **dadurch gekennzeichnet, dass** an dem Gehäuse (5) die in Richtung des Strukturbauteils (3) weisende Schrägfläche (31; 47) angeformt wird.

6. Verfahren zur Herstellung eines Fahrwerkbauteils nach Anspruch 5, **dadurch gekennzeichnet, dass** die gehäuseseitige Schrägfläche (47) auf einem Absatz (29) angeformt wird.

7. Verfahren zur Herstellung eines Fahrwerkbauteils nach einem der Ansprüche 1 bis 6, **dadurch gekennzeichnet, dass** die Verbindung der Durchgangsöffnung (19) mit dem Gehäuse (5) mit einer Spielpassung ausgeführt wird, so dass ein Ringspalt (33) vorliegt.

8. Verfahren zur Herstellung eines Fahrwerkbauteils nach Anspruch 7, **dadurch gekennzeichnet, dass** der Ringspalt (33) zwischen dem Gehäuse (5) und der Durchgangsöffnung (19) durch eine Verschiebung von Volumenanteilen des Gehäuses (5) und/oder des Strukturbauteils (3) geschlossen wird.

9. Verfahren zur Herstellung eines Fahrwerkbauteils nach Anspruch 8, **dadurch gekennzeichnet, dass** ein Rand der Durchgangsöffnung axial gestaucht wird.

10. Verfahren zur Herstellung eines Fahrwerkbauteils nach Anspruch 7, **dadurch gekennzeichnet, dass** der Ringspalt (33) zwischen dem Gehäuse (5) und der Durchgangsöffnung (19) mittels einer Beschichtung der verschweißten Baugruppe (3; 5) geschlossen wird.

11. Verfahren zur Herstellung eines Fahrwerkbauteils nach einem der Ansprüche 1 bis 10, **dadurch gekennzeichnet, dass** Mantelflächen (21; 49) von Aufnahmeöffnung (19) und Gehäuse (5), welche sich jeweils parallel zu den Mittelachsen von Aufnahmeöffnung (19) und Gehäuse (5) erstrecken, miteinander verschweißt werden.

## Claims

1. Method for producing a chassis component (1), comprising a housing (5) which is connected to a structural component (3) by means of a weld (7), a receiving opening (19) being made in the structural component (3), and the housing (5) being pushed into the receiving opening (19), a housing-side face and a structural component-side face being in contact, **characterized in that** at least one of the two faces which are in contact is formed as an oblique face (41; 31; 47) in comparison with the other one of the two faces, with the result that there is a linear contact between the two faces before the weld, the receiving opening (19) in the structural component (3) being configured with an undersize in comparison with the housing geometry which is pushed into the receiving opening (19).

2. Method for producing a chassis component according to Claim 1, **characterized in that** the housing geometry (27) is configured with a constant cross section or with a conical cross section.

3. Method for producing a chassis component according to Claim 1 or 2, **characterized in that** the receiving opening (19) is produced in the structural component (3) by means of a punching method.

4. Method for producing a chassis component according to Claim 3, **characterized in that** the opening has a recess (41) which runs obliquely with respect to the centre axis of the receiving opening (19).

5. Method for producing a chassis component according to Claim 1, **characterized in that** the oblique face (31; 47) which points in the direction of the structural component (3) is formed on the housing (5).

6. Method for producing a chassis component according to Claim 5, **characterized in that** the housing-side oblique face (47) is formed on a shoulder (29).

7. Method for producing a chassis component according to one of Claims 1 to 6, **characterized in that** the connection of the through opening (19) to the housing (5) is configured with a clearance fit, with the result that there is an annular gap (33).

8. Method for producing a chassis component according to Claim 7, **characterized in that** the annular gap (33) between the housing (5) and the through opening (19) is closed by way of a shift of volumetric proportions of the housing (5) and/or the structural component (3).

9. Method for producing a chassis component according to Claim 8, **characterized in that** an edge of the through opening is upset axially.

10. Method for producing a chassis component according to Claim 7, **characterized in that** the annular gap (33) between the housing (5) and the through opening (19) is closed by means of a coating of the welded assembly (3; 5) .

11. Method for producing a chassis component according to one of Claims 1 to 10, **characterized in that** shell faces (21; 49) of the receiving opening (19) and the housing (5) which extend in each case parallel to the centre axes of the receiving opening (19) and the housing (5) are welded to one another.

## Revendications

1. Procédé de fabrication d'un composant de châssis (1), comprenant un boîtier (5) qui est relié à un composant structural (3) au moyen d'un soudage (7), une ouverture d'accueil (19) étant pratiquée dans le composant structural (3) et le boîtier (5) étant inséré dans l'ouverture d'accueil (19), une surface côté boîtier et une surface côté composant structural se touchant, **caractérisé en ce qu'**au moins l'une des deux surfaces qui se touchent est façonnée sous la forme d'une surface inclinée (41 ; 31 ; 47) par rapport à l'autre des deux surfaces, de sorte qu'un contact linéaire entre les deux surfaces soit établi avant le soudage, l'ouverture d'accueil (19) dans le composant structural (3) étant exécutée avec une cote inférieure par rapport à la géométrie du boîtier qui est insérée dans l'ouverture d'accueil (19).

2. Procédé de fabrication d'un composant de châssis selon la revendication 1, **caractérisé en ce que** la géométrie de boîtier (27) est réalisée avec une section transversale constante ou avec une section transversale conique.

3. Procédé de fabrication d'un composant de châssis selon la revendication 1 ou 2, **caractérisé en ce que** l'ouverture d'accueil (19) est produite dans le composant structural (3) au moyen d'un procédé d'estampage.

4. Procédé de fabrication d'un composant de châssis selon la revendication 3, **caractérisé en ce que** l'ouverture possède un abaissement (41) qui s'étend en biais par rapport à l'axe central de l'ouverture d'accueil (19).

5. Procédé de fabrication d'un composant de châssis selon la revendication 1, **caractérisé en ce que** la surface inclinée (31 ; 47) orientée en direction du composant structural (3) est façonnée au niveau du boîtier (5).

6. Procédé de fabrication d'un composant de châssis selon la revendication 5, **caractérisé en ce que** la surface inclinée (47) côté boîtier est façonnée sur un gradin (29).

7. Procédé de fabrication d'un composant de châssis selon l'une des revendications 1 à 6, **caractérisé en ce que** la liaison de l'ouverture de passage (19) avec le boîtier (5) est réalisée avec un ajustement par jeu de sorte qu'il existe un interstice annulaire (33).

8. Procédé de fabrication d'un composant de châssis selon la revendication 7, **caractérisé en ce que** l'interstice annulaire (33) entre le boîtier (5) et l'ouverture de passage (19) est fermé par un décalage des parts du volume du boîtier (5) et/ou du composant structural (3).

9. Procédé de fabrication d'un composant de châssis selon la revendication 8, **caractérisé en ce qu'**un bord de l'ouverture de passage est refoulé dans le sens axial.

10. Procédé de fabrication d'un composant de châssis selon la revendication 7, **caractérisé en ce que** l'interstice annulaire (33) entre le boîtier (5) et l'ouverture de passage (19) est fermé au moyen d'un revêtement du sous-ensemble (3 ; 5) soudé.

11. Procédé de fabrication d'un composant de châssis selon l'une des revendications 1 à 10, **caractérisé en ce que** les surfaces d'enveloppe (21 ; 49) de l'ouverture d'accueil (19) et du boîtier (5) qui s'étendent respectivement en parallèle des axes centraux de l'ouverture d'accueil (19) et du boîtier (5) sont soudées entre elles.
